(19) **Europäisches Patentamt**
**European Patent Office**
**Office européen des brevets**

(11) **EP 2 300 849 B1**

(12) **EUROPEAN PATENT SPECIFICATION**

(45) Date of publication and mention
of the grant of the patent:
**20.06.2012 Bulletin 2012/25**

(51) Int Cl.:
**G01S 13/84** (2006.01)

(21) Application number: **09773014.7**

(86) International application number:
**PCT/IB2009/052881**

(22) Date of filing: **02.07.2009**

(87) International publication number:
**WO 2010/001354 (07.01.2010 Gazette 2010/01)**

(54) **A SYSTEM FOR READING INFORMATION TRANSMITTED FROM A TRANSPONDER**

SYSTEM ZUM LESEN VON TRANSPONDERÜBERMITTELTEN INFORMATIONEN

SYSTÈME POUR LIRE DES INFORMATIONS TRANSMISES DEPUIS UN TRANSPONDEUR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.07.2008 EP 08104611**

(43) Date of publication of application:
**30.03.2011 Bulletin 2011/13**

(73) Proprietor: **NXP B.V.**
**5656 AG Eindhoven (NL)**

(72) Inventor: **MUEHLMANN, Ulrich**
**NL-5656 AE Eindhoven (NL)**

(74) Representative: **Krott, Michel et al**
**NXP B.V.**
**IP & Licensing Department**
**High Tech Campus 60**
**5656 AG Eindhoven (NL)**

(56) References cited:
**US-A1- 2005 099 333    US-A1- 2008 150 699**

**Description**

FIELD OF THE INVENTION

The invention relates to a reader device for reading information transmitted from a transponder.

Furthermore, the invention relates to a communication system.

Moreover, the invention relates to a method of reading information transmitted from a transponder.

Beyond this, the invention relates to a program element.

Furthermore, the invention relates to a computer-readable medium.

BACKGROUND OF THE INVENTION

The importance of automatic identification systems increases particularly in the service sector, in the field of logistics, in the field of commerce and in the field of industrial production. Further applications of identification systems are related to the identification of persons and animals.

In particular contactless identification systems like transponder systems (for instance using an RFID tag) are suitable for a wireless transmission of data in a fast manner and without cable connections that may be disturbing. Such systems use the emission and reflection/absorption of electromagnetic waves, particularly in the high frequency domain.

A shortcoming of the RFID technology is that undesired cross-talk may occur when multiple tags are to be read by multiple gates or readers.

US 6,943,725 discloses an access control system for an object, particularly a motor vehicle, which comprises at least one base station with a transceiver device that transmits a wideband modulated interrogation signal, at least one transponder that has a modulation device, in order to modulate an auxiliary carrier signal, the frequency of which is changed between an infinite number of frequency positions, onto an interrogation signal received at a distance from the base station and reflect it as a code-modulated response signal, and an evaluation device that is connected after the transceiver device and that evaluates the response signal in sidebands of the changed frequency positions, with respect code and distance.

US 2005/0012653 discloses separation determination systems for determining the separation between a base station and a transponder, whereby the base station includes an oscillating signal source, for generating a signal and a transmission device for broadcasting the signal. The transponder includes a receiving device, for receiving the signal from the base station, an oscillator, for generating a signal which is phase-coherent therewith and a transmission device for broadcasting the phase-coherent signal. The base station furthermore includes a receiver device, for receiving the phase-coherent signal from the transponder and a separation determination device for determining the distance between base station and transponder. The system and components may be improved whereby the oscillator in the transponder is energized with the received signal in order to generate a quasi-phase-coherent signal.

US 2008/150699 A1 discloses a distance measuring method between a reader/writer and an RFID tag. The distance measuring is based on a phase information between a reflected signal reflected from the RFID tag and a requesting signal from the reader/writer for each of the carrier frequencies transmitted from the reader/writer.

US 2005/099333 A1 discloses a determination of a distance between a base station and a mobile object wherein an HF carrier frequency and an offset frequency are predefined for an IQ modulation in a base station. The HF carrier frequency is sequentially increased and decreased by the offset frequency. The HF carrier signal it subsequently transmitted and simultaneously mixed with an HF carrier signal that has been backscattered by the mobile object to obtain a carrier phase signals. A difference between backscattered signals of different carrier frequencies transmitted from the base station is used for a distance determination.

OBJECT AND SUMMARY OF THE INVENTION

It is an object of the invention to read information from a transponder with high precision.

In order to achieve the object defined above, a device for reading information transmitted from a transponder, a communication system, a method of reading information transmitted from a transponder, a program element and a computer-readable medium according to the independent claims are provided.

According to an exemplary embodiment of the invention, a reader device (such as a base station) for reading information transmitted from a transponder is provided, the reader device comprising a distance estimation unit adapted for estimating a (spatial) distance between the reader device and the transponder based on a propagation related difference of a property of two sidebands of a backscattering signal transmitted from the transponder (particularly in response to the emission of a primary electromagnetic radiation beam by the reader device).

According to another exemplary embodiment of the invention, a communication system is provided, comprising a transponder (or a plurality of transponders) for transmitting information to a reader device, and a reader device (or a plurality of reader devices) having the above-mentioned features for reading information transmitted from the transponder. method comprising estimating a distance between the reader device and the transponder based on a propagation related difference of a property of two sidebands of a backscattering signal transmitted from the transponder.

According to still another exemplary embodiment of the invention, a program element (for instance a software routine, in source code or in executable code) is provided, which, when being executed by a processor, is adapted to control or carry out a data processing method having the above mentioned features.

According to yet another exemplary embodiment of the invention, a computer-readable medium (for instance a CD, a DVD, a USB stick, a floppy disk or a harddisk) is provided, in which a computer program is stored which, when being executed by a processor, is adapted to control or carry out a data processing method having the above mentioned features.

Data processing which may be performed according to embodiments of the invention can be realized by a computer program , that is by software, or by using one or more special electronic optimization circuits, that is in hardware, or in hybrid form, that is by means of software components and hardware components.

The term "distance" may denote a physical spacing between a transponder and a reader device.

The term "propagation related difference of a property of two sidebands of a backscattering signal" may particularly denote the fact that a frequency difference between two sidebands of a backscattering signal is connected with further differences of properties of corresponding electromagnetic radiation beams when propagating from the transponder back to the reader device. Different propagation properties of the different frequency components may result in different delay times and different angular/phase properties, etc.

The term "reader device" may denote a base station adapted for sending an electromagnetic radiation beam for reading out a transponder and detecting a back reflected signal. Such a reader device may be an RFID reader, for instance.

The term "transponder" may particularly denote an RFID tag or a (for instance contactless) smartcard. More generally, a transponder may be a device (for instance comprising a chip) which may automatically transmit certain (for example coded) data when activated by a special signal from an interrogator.

According to an exemplary embodiment of the invention, a distance between a reader device and an intentionally or unintentionally communicatively coupled transponder may be estimated based on a different and distance dependent propagation characteristic of two sidebands of a backscattering signal of the transponder in response to the application of a stimulus signal by the reader device resulting in easy measurable parameters which are different for the two sidebands having different frequencies. When propagating from the transponder to the reader device, the different frequency values of the two sidebands (arranged above and below a carrier frequency of the stimulus signal serving as a power supply for the transponder) result in different measurable properties such as propagation phase and propagation delay of the two sidebands. When these two different frequency components propagate from the transponder to the reader device, the different propagation characteristics of these two frequency components may be emphasized during the propagation, thereby allowing a precise and reliable estimation of the relative spatial arrangement between reader device and transponder. Such position/distance information may be used by the reader device for control purposes. For instance, the distance information can be used for a decision whether a detected communication between transponder and reader device is intentional and the corresponding communication message is meaningful for the reader device since their distance is less than a predefined threshold value (for instance 5m). If the distance is measured to be larger than the predefined threshold value, the reader device may reason that no communication is intended between the reader device and the transponder. The latter scenario my occur in an arrangement of multiple reader devices and multiple transponders when undesired crosstalk between the various communication channels may occur. In this situation, it may be advantageous that each reader device can distinguish between significant and insignificant signals on the basis of the knowledge of the spatial distance of a source of a respective communication message. Additionally or alternatively, it is also possible to control communication parameters between reader device and transponder in accordance with a measured distance, for instance to adjust an emission power in accordance with the detected orientation between transponder and reader device.

According to an exemplary embodiment of the invention, a range estimator for estimating a distance between an UHF (ultra high frequency) transponder and a reader based on frequency dependent tag backscatter properties is provided. More particularly, a method of estimating the distance between a reader and a transponder by evaluating the arrival delay or arrival angle of the two sidebands of a backscattering signal from a transponder with a discrete-time quadrature subsample estimation is provided.

According to an exemplary embodiment of the invention, a method for estimation of the radio range for UHF RFID tags is provided. The nature of UHF long-range readers can lead to the reading of unwanted tags in adjacent gates or doors. Since tags contain not much intelligence in order to use the power drawn from the radio field of the reader efficiently, a backscatter modulator may be primarily a transistor that varies the reflection coefficient according the data to be sent. This reflection coefficient variation affects the radar cross-section and the resulting backscattering signal may be detected and decoded by the reader. The backscattering signal may be primarily a narrow-band, double side-band amplitude modulation with a frequency offset from the carrier frequency dependent on the link frequency. During back propagation of the signals to the reader, an angle difference and a different propagation delay may arise because of the different wavelengths of the upper and lower sideband (the distance between transponder and reader is encoded in the arrival delay or arrival angle of the two sidebands).

According to an exemplary embodiment of the invention, an improved backscatter modulation for range estimation in UHF RFID systems is provided. The range estimation based on the backscatter signal has some extent of complexity because of the underlying backscatter modulation. The modulation may be based on a modulation transistor that switches the chip impedance between two dedicated states. Then, the upper and lower sidebands are real signals, and it may be a challenge to separate them in the receiving part of the UHF reader. A further improved way for the backscatter modulation results from the utilization of a quadrature modulator. Simply speaking, the upper sideband is located in the real part of the signals and the lower sideband is located in the imaginary part of the signal in such an embodiment. In an alternative configuration, the lower sideband may be located in the real part of the signals, and the upper sideband may be located in the imaginary part of the signal. At the receiver of the UHF reader, a coherent receiver can be used to detect the upper and lower sideband of the complex signal. Furthermore, a phase offset detection approach or the like may also be applied in such a scenario.

In the following, further exemplary embodiments of the reader device will be explained. However, these embodiments also apply to the communication system, to the method, to the program element and to the computer-readable medium.

The distance estimation unit may be adapted for estimating the distance between the reader device and the transponder based on a difference of an arrival time of the two sidebands of the backscattering signal emitted from the transponder. The different emission frequencies of the two sidebands may result in a different delay between reflection of the corresponding components by the transponder and arrival at the reader device. Thus, a time dependent measurement may be performed in the reader device allowing to estimate both arrival times of the two sidebands separately, or alternatively estimating a time difference between the two arrival times.

The distance estimation unit may additionally or alternatively be adapted for estimating the distance between the reader device and the transponder based on a phase difference (or a phase offset) of the two sidebands of the backscattering signal transmitted from the transponder. Due to the different propagation properties and the different frequencies as well as the different reflection properties of the two sidebands, the phase characteristics of the two sidebands may differ from one another. Embodiments of the invention may use such a difference for deriving the distance between reader device and transponder.

In an embodiment, the characteristics of and the differences between the reflected signals may be determined, for instance, by the implementation of corresponding filters, for instance band pass filters.

The distance estimation unit may be adapted for estimating the distance between the reader device and the transponder based on a discrete-time quadrature subsample estimation. Particularly, the implementation of a quadrature modulator in the transponder may allow to determine the spatial position of the transponder relative to the reader device with high accuracy.

The distance estimation unit may be adapted for estimating the distance between the reader device and the transponder based on a separation of real part and imaginary part of a complex backscattering signal transmitted from the transponder. It may be possible to assign the real part of a complex transmission function to one of the two sidebands, and the imaginary part of the complex transmission function to another one of the sidebands, provided that a corresponding modulation is performed by the transponder. This may allow, with a straightforward mathematical procedure, to accurately separate the different components with high precision, thereby further increasing the resolution when determining the distance.

The distance estimation unit may comprise a coherent receiver for estimating the distance between the reader device and the transponder based on a separation of real part and imaginary part of the signal.

In case of a backscattering signal which is free of an imaginary part, frequency selective filters may be implemented to separate the two sidebands based on their different wavelengths.

A determination (or decision) unit may be provided and adapted for determining (or deciding) whether the backscattering signal belongs to a communication between the reader device and the transponder based on the evaluated distance. A decision criterion may be whether the detected distance is smaller/equal (acceptance of the signal) or is larger (rejection of the signal) than a predefined threshold value. In a scenario, in which various reader devices and various transponders are present, it may be important for a reader device to determine whether a communication message received from a particular transponder really relates to the present communication system. The distance between the reader device and the transponder may be an easily determinable and reliable parameter indicating whether a signal received by a reader device really originates from an assigned transponder.

The reader device may comprise a decoding unit adapted for decoding information encoded in the backscattering signal only upon previous determination, by the determination unit , that the backscattering signal belongs to a communication between the reader device and the transponder. In an embodiment, the decoding unit will only start decoding after successful identification or recognition that a specific signal is really addressed to the present reader device. This may save processing capabilities and may avoid unnecessary processing of signals which are not addressed to the reader device.

Particularly, the reader device may be adapted as an ultra high-frequency (UHF) long-range reader device. Specifically in such a scenario it may be important for a reader device to distinguish between signals belonging to the reader device and signals from other transponders that are not relevant for the reader device. A corresponding carrier frequency may be, for instance, between 840 MHz and 960 MHz. However, this is only an example, and other embodiments may use other frequencies, for instance 50 MHz.

The two sidebands may be arranged symmetrical with regard to a central frequency, i.e. a carrier frequency generated by the reader device. One of the sidebands may be lower than this central frequency and the other one of the two sidebands may be higher than the central frequency. Thus, it may be possible to clearly distinguish the sidebands from other signals on the basis of this information.

The aspects defined above and further aspects of the invention are apparent from the examples of embodiment to be described hereinafter and are explained with reference to these examples of embodiment.

BRIEF DESCRIPTION OF THE DRAWINGS

The invention will be described in more detail hereinafter with reference to examples of embodiment but to which the invention is not limited.

Fig. 1 illustrates a communication system according to an exemplary embodiment of the invention.
Fig. 2 illustrates the frequency distribution of a backscattering signal as a basis for determining a distance between a transponder and a reader device according to an exemplary embodiment of the invention.
Fig. 3 illustrates a reader device according to an exemplary embodiment of the invention.

DETAILED DESCRIPTION OF THE EMBODIMENTS

The illustration in the drawing is schematically. In different drawings, similar or identical elements are provided with the same reference signs.

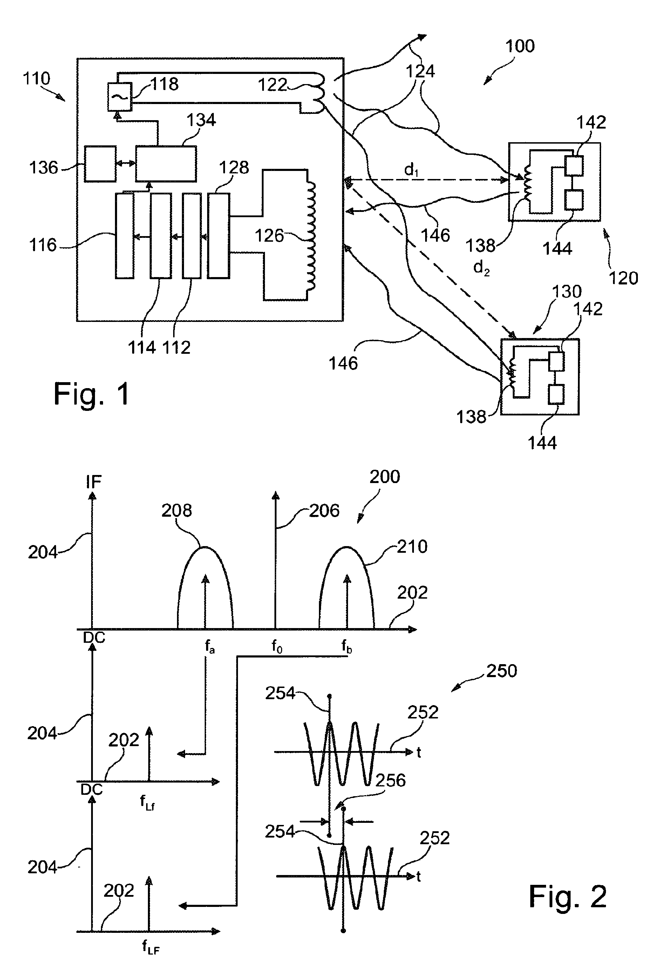

In the following, referring to Fig. 1, a communication system 100 according to an exemplary embodiment of the invention will be explained.

The communication system 100 comprises a reader device 110 for reading information transmitted from a transponder 120. Although only the transponder 120 is intended to communicate with the reader device 110 in the present scenario, it may happen under undesired circumstances (for instance in an environment in which a plurality of transponders and reader devices are present) that also a transponder 130 which is not intended for a communication with the reader device 110 backscatters electromagnetic radiation emitted by the reader device 110. This may result in undesired crosstalk between different communication channels, as will be explained in the following.

Embodiments of the invention allow the reader device 110 to distinguish between signals originating from the transponder 120 (intended for a communication with the reader device 110) and signals originating from the transponder 130 (not intended for a communication with the reader device 110). As a criteria for this distinction, different distances $d_1$ of the transponder 120 from the reader device 110 and $d_2$ of the transponder 130 from the reader device 110 may be taken into account, as will be explained below in more detail.

The communication system 100 is adapted for performing a measurement of a distance $d_1$, $d_2$ between the base station 110 and the corresponding transponders 120, 130. The backscattering transponders 120, 130 do not have their own power source, but are powered and reflect back an electromagnetic signal they receive from the reader device 110, with or without previous amplification. Knowledge of the distances $d_1$, $d_2$ can be used, for example, for access control or the determination whether a received signal is really addressed to the reader device 110, and not to another reader device.

The reader device 110 comprises an oscillator unit 118 for generating an oscillating signal having a specific frequency, namely a carrier frequency of, for instance, 925 MHz. An output of the oscillator unit 118 is connected to a transmission antenna 122 which emits electromagnetic radiation beams 124 with the carrier frequency. In the described embodiment, the transmission antenna 122 is provided separately from a reception antenna 126. In alternative embodiments, it is also possible that the transmission antenna 122 is also used for reception.

Under the control of a control unit 134 of the reader device 110, the oscillation unit 118 may be triggered to generate an oscillation, and the connected transmission antenna 122 will emit the electromagnetic radiation beam 124, which may an ultra high frequency beam. The control unit 134 may be a microprocessor or a central processing unit (CPU). The reader device 110 further comprises an input/output unit 136 adapted for a bidirectional communication with the control unit 134. The input/output unit 136 may comprise input elements such as a keypad, buttons, a joystick, etc.

and may also have a display unit such as liquid crystal display (LCD) for displaying information related to the operation of the reader device 110 to a user.

The transponder 120 comprises a transceiver antenna 138 which is adapted to receive the electromagnetic radiation beam 124 emitted by the transmission antenna 122. A control unit 142 of the transponder 120 may be a microprocessor chip having processing capabilities, particularly modulating capabilities. The control unit 142 may have also access to an optional memory unit 144 for storing information, for instance an EEPROM. In accordance with a communication message to be transmitted from the transponder 120 to the reader device 110 after being activated by the interrogation and power supply signal 124, a reflection transistor of the transponder 120 may manipulate/modulate the received signal 124 before reflection or reemission by the antenna 138. In accordance with this, a response signal 146 can be reflected from the transponder 120 and can propagate back to the reader device 110.

The transponder 130 which is actually not intended for a communication with the reader device 110 has a similar construction as the transponder 120.

Although not shown in the figures, the transponders 120, 130 may or may not comprise an additional oscillator.

The present inventor has recognized that the reflection characteristics of the transponders 120, 130 include different reflection properties for two sidebands of a backscattered signal 146. These two sidebands may have different frequencies, and consequently differ regarding backscattering properties. More particularly, an arrival time of the two sidebands at the position of the reception antenna 126 may be different. The quantitative extent of the time interval between the arrival times depends on the distance $d_1$, $d_2$ between the respective transponder 120, 130 on the one hand and the reader device 110 on the other hand. Furthermore, phase offsets of the backscattered signals 146 are different for the two sidebands and can be detected by the reception antenna 126. A frequency selective filter unit 128 may allow to separate the two sidebands for subsequent independent or individual analysis. Based on an evaluation of the two sidebands, the distance estimation unit 112 of the reader device 110 can determine the distances $d_1$, $d_2$ of a corresponding one of the transponders 120, 130 based on an evaluation of the response signals 146, in accordance with a mathematical analysis scheme described below.

More particularly, a discrete time quadrature subsample estimation may be carried out by the system 100 to determine the distance values. It is also possible that a phase difference of the two sidebands of the backscattering signal 146 is evaluated to obtain information indicative of the distances $d_1$ or $d_2$.

In an embodiment, the system 100 may be adapted in such a manner that an imaginary backscattering signal 146 having a real part and imaginary part is analyzed in such a manner that one of the two parts is assigned to a first of the sidebands and the other signal is assigned to the other one of the sidebands. Thus, a separation of two components of a complex radiation profile may allow to separate the signal components to thereby allow to derive distance information.

The distance information determined by the distance estimation unit 112 may be supplied to a determination unit or decision unit 114 adapted for determining whether the backscattering signal 146 belongs to an intended communication between the reader device 110 and the transponder 120 or belongs to a communication between a different reader device and a different transponder 130 and is not addressed to the reader device 110. The evaluated distance value $d_1$ or $d_2$ may be used as a decision criteria whether the transponder 120 is still within the range of the reader device 110, or not (as in case of the transponder 130).

Only when the determination unit 114 has determined that the detected signal 146 corresponds to an assigned transponder 120, a connected decoding unit 116 will start decoding the signal in order to derive the information, for instance identification or other data content information included in the reflected signal 146. In an embodiment in which the transponder 120 is attached to a good to be purchased, for instance in a supermarket, this information may be the price of the good to which the transponder 120 is attached. In this example, the further transponder 130 may be attached to a good which is not purchased by a buyer, but by another buyer queuing at another cash-desk than the cash-desk formed by the reader device 110.

Thus, the communication system 100 serves as a range estimator to detect the distance between UHF transponder 120 and reader 110 based on the backscatter signals.

The nature of UHF long-range readers can lead to the reading of unwanted tags in adjacent gates or doors. Embodiments of the invention detect the range between transponder and reader in order to determine the desired read volume of one reader.

Since tags contain less intelligence in order to be power efficient, the backscatter modulator may be primarily a transistor that varies the reflection coefficient according to a desired pulse train. This reflection coefficient variation affects the radar cross-section and the resulting backscattering signal is detected and decoded by the reader. The backscattering signal is primarily a narrow-band, double side-band amplitude modulation with a frequency offset $\Delta\omega_1$ from the carrier frequency $\omega_0$ dependent on the link frequency. During back propagation of the signals to the reader, an angle difference will arise because of the different wavelengths of the upper and lower sideband. Narrow band signal characteristic has for instance the pilot tone, which is a feature of the protocol.

Mathematically expressed, the modulation reads as follows (t denotes the time):

$$\sin(\omega_0 t)\sin(\omega_1 t) = \frac{1}{2}\left\{\cos\left[(\omega_0 - \omega_1)t\right] - \cos\left[(\omega_0 + \omega_1)t\right]\right\}$$

Now, the following substitution is performed: $\omega_0 - \omega_1 = \omega_a$ and $\omega_0 + \omega_1 = \omega_b$

In free space the back propagation (function S) to the reader can be expressed as:

$$S_a(t,r) = \cos(\omega_a t - \beta_a r) \text{ with } \varphi_a = \beta_a r \text{ and } \beta_a = \frac{2\pi}{\lambda_a} \text{ and } \lambda_a = \frac{c}{f_a} \text{ and } \omega_a = 2\pi f_a$$

and

$$S_b(t,r) = \cos(\omega_b t - \beta_b r) \text{ with } \varphi_b = \beta_b r \text{ and } \beta_b = \frac{2\pi}{\lambda_b} \text{ and } \lambda_b = \frac{c}{f_b} \text{ and } \omega_b = 2\pi f_b ,$$

respectively

In these equations, r denotes the distance between transponder and reader, $\varphi$ denotes phase values of the backscattered signals, and $\lambda$ denotes the wavelengths of the sidebands.

Because of different frequencies of the upper and lower sideband, a different propagation delay will occur. At the receiver part of the reader, the distance between transponder and reader is encoded in the arrival delay or arrival angle of the two sidebands and can be extracted with a discrete-time estimation of delay method.

On major challenge might be the subdivision of the upper and lower sideband in the receiver. One possible implementation is illustrated in Fig. 2 which shows the principle of an angle difference extraction method.

Fig. 2 shows a diagram 200 having an abscissa 202 along which a frequency is plotted. Along an ordinate 204, an intensity of a signal is plotted. Fig. 2 shows the constitution of a backscattered signal and illustrates a central carrier frequency 206, as well as a low frequency sideband 208 and a high frequency sideband 210. The characteristics of the sidebands 208, 210 regarding delay and/or angle are different. An angle difference 256 between the sidebands 208, 210 can be taken from a diagram 250 having an abscissa 252 along which the time is plotted. Along an ordinate 254 of the diagram 250, an amplitude of a signal is plotted.

An idea of an embodiment of the invention is based on an intermediate frequency (IF) receiver that mixes the two sidebands to a frequency close to the bandwidth of the lower sideband. Afterwards, the signal is digitized and two band-pass filters may be used to subdivide the upper sideband from the lower sideband in the digital domain. In the next step, the separated frequencies may be down-mixed to the specified link frequency (LF) of the backscatter signal (based-band frequency $\omega_1$). Finally, the time delay or angle of both signals can be estimated in between by using a discrete-time estimation of delay method.

Mathematically expressed:

$S_a(t,r)-S_b(t.r)=\cos(\omega_1 t - \beta_a r)-\cos(\omega_1 t-\beta_b r)$ and therefore,

$\Delta\varphi_t = \omega_1 t-\beta_a r-\omega_1 t+\beta_b r=\beta_b r-\beta_a r = r(\beta_b-\beta_a)$ and finally,

$$\Delta\varphi = r\left(\frac{2\pi}{\lambda_b} - \frac{2\pi}{\lambda_a}\right)$$

Thus, measuring the phase difference $\Delta\varphi$ between the sub-beams of the sideband, and knowing both wave numbers, it is possible to derive the distance between reader device and transponder.

Since the offset between $\beta_b$ and $\beta_a$ is rarely low, a sensitivity of about 0.72°/m may be required in the frequency range of 800 MHz to 900 MHz.

An advantage of the described range estimation is that it may introduce some sort of addition information. Knowing the range between reader and transponder can be used to reduce the read volume of a desired area and avoid the reading of unwanted tags.

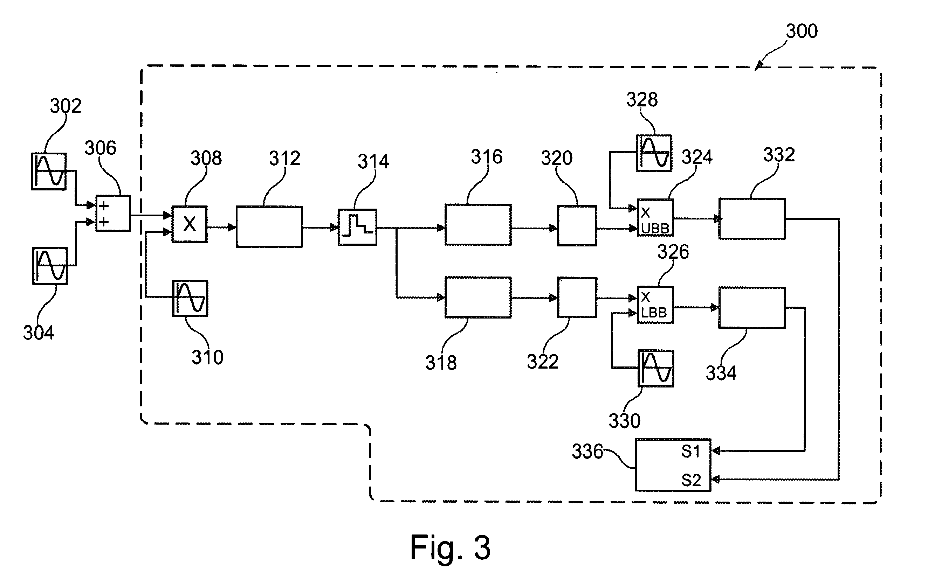

Fig. 3 illustrates a reader device 300 according to an exemplary embodiment of the invention.

A Matlab - Simulink model is used to demonstrate the feasibility of the corresponding range estimation technique. The received upper and lower sidebands of the narrowband backscatter signal (the upper sideband is indicated schematically with reference sign 302, and the lower sideband is indicated schematically with reference sign 304) are modelled as two simple sinusoidal waves with a frequency of $f_a$ and $f_b$, respectively. The upper sideband 302 and the lower sideband 304 are added in an adder channel 306 representing the transmission medium between transponder and reader device 300.

An IF-mixer 308 of the reader device 300 down-converts the RF frequency to an adequate frequency for feasible ADC conversion. ADCs can cope with 50MHz sampling frequency and above. The IF mixer 308 mixes an output of the adder channel 306 with a signal generated by an IF signal generator 310.

After image rejection filtering in an image rejection filtering unit 312 (allowing the sidebands 302, 304 to pass, whereas high frequency mixing products may be eliminated), the signal is digitized in an ADC (Analog-to-Digital-Converter) 314 and is passed through two band-pass filters 316, 318 in order to subdivide both signals. These filters 316, 318 are FIR filters with equal order. Filter 316 allows selectively the upper sideband to pass, whereas filter 318 allows selectively the lower sideband to pass.

A respective group delay equalizer 320, 322 can be used to cancel introduced angles of the system. Especially the image rejection filter 312 in the analog domain may affect both signals in a different way, since frequencies are different and that may result in different group delays. However, a calibration may be performed, for instance, a transponder is placed at a distinct point in space, say one meter, afterwards the delay is estimated and used as a reference.

Digital U-BB and L-BB mixers 324, 326 down-convert both signals to equal frequencies (using frequency sources 328, 330, respectively). This operation does not affect the angular offset of both signals. Two equal image rejection filters 332, 334 are used to reject the higher frequency component of the mixer outputs. Then, the phase delay between both signals is estimated using the unbiased quadrature delay estimator (UQDE) unit 336. The UQDE estimator 336 performs as follows.

$$\hat{\varphi} = \tan^{-1}\left(\frac{Q_{m1} - Q_{m3}}{Q_{m2} + Q_{m4}}\right)$$

where:

$$Q_{m1} = \frac{1}{N-\Delta}\sum_{k=\Delta}^{N-1} s_1(k-\Delta)s_2(k)$$

$$Q_{m2} = \frac{1}{N-\Delta}\sum_{k=\Delta}^{N-1} s_1(k)s_2(k)$$

$$Q_{m3} = \frac{1}{N-\Delta}\sum_{k=\Delta}^{N-1} s_1(k)s_2(k-\Delta)$$

$$Q_{m4} = \frac{1}{N-\Delta}\sum_{k=\Delta}^{N-1} s_1(k-\Delta)s_2(k-\Delta)$$

and:

$$\Delta = \frac{\pi}{2\omega_i T}$$

N represents the number of samples used for phase delay estimation and $\Delta$ represents the $\pi/4$ delay in order to derive the quadrature-phase components from the in-phase components. The extension to two additional mixers is one other alternative to gain the quadrature-phase and the in-phase components in common. The performance limit of this estimator is a maximum sensitivity of -57.5dB and the performance bound for phase delay estimation is

$$CPB = \min\left\{\frac{\pi^2}{3}, \frac{1}{N\, SNR}\right\}$$

Alternative phase estimation methods may be implemented, for instance based on a Fourier transformation.

In an embodiment, range estimation is feasible using the backscatter signals in the UHF frequency range. One major advantage of this presented architecture is that there is no violation of the ETSI/FCC rules. Furthermore, no additional requirements are demanded according to the GEN2 protocol since the pilot tone during the EPC transmission of the transponder can be used for range estimation.

In an embodiment, a transponder is used having a modulation characteristic which generates two sidebands (one of which being shifted to a frequency higher than a carrier frequency of a reader device, the other one of which being shifted to a frequency lower than a carrier frequency of a reader device) in response to the irradiation of the transponder with a carrier frequency provided by a reader device. The reader device may then evaluate the response signal by separating it into the two frequency components, for instance by filtering. The distance between reader device and transponder may then be computed based on the different characteristic of the two separated components.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A reader device (110) for reading information transmitted from a transponder (120), the reader device (110) comprising:

   - a distance estimation unit (112) adapted for estimating a distance between the reader device (110) and the transponder (120) based on a propagation related difference of a property of two sidebands of a backscattering signal transmitted from the transponder (120),

   wherein the distance estimation unit (112) is adapted for estimating the distance between the reader device (110) and the transponder (120) based on a separation of real part and imaginary part of the backscattering signal transmitted from the transponder (120).

2. The reader device (110) according to claim 1, wherein the distance estimation unit (112) is adapted for estimating the distance between the reader device (110) and the transponder (120) based on a difference of an arrival time of the two sidebands of the backscattering signal transmitted from the transponder (110).

3. The reader device (110) according to claim 1, wherein the distance estimation unit (112) is adapted for estimating the distance between the reader device (110) and the transponder (120) based on a phase difference of the two sidebands of the backscattering signal transmitted from the transponder (120).

4. The reader device (110) according to claim 1, wherein the distance estimation unit (112) is adapted for estimating the distance between the reader device (110) and the transponder (120) based on a discrete-time quadrature subsample estimation.

5. The reader device (110) according to claim 1, wherein the distance estimation unit (112) comprises a coherent receiver for estimating the distance between the reader device (110) and the transponder (120) based on a separation of real part and imaginary part of a signal transmitted from the transponder (120).

6. The reader device (110) according to claim 1, comprising a determination unit (114) adapted for determining whether the backscattering signal belongs to a communication between the reader device (110) and the transponder (120) based on the evaluated distance.

7. The reader device (110) according to claim 6, comprising a decoding unit (116) adapted for decoding information encoded in the backscattering signal upon determination, by the determination unit (114), that the backscattering signal belongs to a communication between the reader device (110) and the transponder (120).

8. The reader device (110) according to claim 1, adapted as a UHF long-range reader device.

9. The reader device (110) according to claim 1, wherein the two sidebands are arranged symmetrical with regard to a carrier frequency generated by the reader device (110).

10. A communication system (100), comprising:

   - a transponder (120) for transmitting information to a reader device (110);
   - a reader device (110) according to claim 1 for reading information transmitted from the transponder (120).

11. The communication system (100) according to claim 10, wherein the transponder (120) comprises one of the group consisting of a radio frequency identification tag and a contactless chip card.

12. A method of reading, by a reader device (110), information transmitted from a transponder (120), the method comprising:

   - estimating a distance between the reader device (110) and the transponder (120) based on a propagation related difference of a property of two sidebands of a backscattering signal transmitted from the transponder (120),

   wherein the estimating of the distance between the reader device (110) and the transponder (120) is based on a separation of real part and imaginary part of the backscattering signal transmitted from the transponder (120).

13. A computer-readable medium, in which a computer program of reading, by a reader device (110), information transmitted from a transponder (120) is stored, which computer program, when being executed by a processor, is adapted to carry out or control a method according to claim 12.

14. A program element of reading, by a reader device (110), information transmitted from a transponder (120), which program element, when being executed by a processor, is adapted to carry out or control a method according to claim 12.


**Patentansprüche**

1. Eine Lesevorrichtung (110) zum Lesen von Information, übertragen von einem Transponder (120), die Lesevorrichtung (110) aufweisend:

   eine Distanzabschätzungseinheit (112), welche adaptiert ist zum Abschätzen einer Distanz zwischen der Lesevorrichtung (110) und dem Transponder (120) basierend auf einer ausbreitungsbezogenen Differenz von einer Eigenschaft von zwei Seitenbändem eines rückgestreuten Signals, welches vom Transponder (120) übertragen wird,
   wobei die Abstandsabschätzungseinheit (120) adaptiert ist zum Abschätzen des Abstands zwischen der Lesevorrichtung (110) und dem Transponder (120), basierend auf einer Trennung eines Realteils und eines Imaginärteils des rückgestreuten Signals, welches von dem Transponder (120) übertragen wird.

2. Die Lesevorrichtung (110) gemäß Anspruch 1,
   wobei die Distanzabschätzungseinheit (112) adaptiert ist zum Abschätzen der Distanz zwischen der Lesevorrichtung (110) und dem Transponder (120) basierend auf einer Differenz von einer Ankunftszeit der zwei Seitenbänder von dem rückgestreuten Signal, welches von dem Transponder (110) übertragen wird.

3. Die Lesevorrichtung (110) gemäß Anspruch 1,
   wobei die Distanzabschätzungseinheit (112) adaptiert ist zum Abschätzen der Distanz zwischen der Lesevorrichtung (110) und dem Transponder (120) basierend auf einer Phasendifferenz der zwei Seitenbänder von dem rückgestreuten Signal, welches von dem Transponder (110) übertragen wird.

4. Die Lesevorrichtung (110) gemäß Anspruch 1,
   wobei die Distanzabschätzungseinheit (112) adaptiert ist zum Abschätzen der Distanz zwischen der Lesevorrichtung (110) und dem Transponder (120) basierend auf einer zeitdiskreten Quadratur-Teilproben-Abschätzung.

**5.** Die Lesevorrichtung (110) gemäß Anspruch 1,
wobei die Distanzabschätzungseinheit (112) aufweist einen kohärenten Empfänger zum Abschätzen der Distanz zwischen der Lesevorrichtung (110) und dem Transponder (120) basierend auf einer Trennung des Realteils und des Imaginärteils des Signals, welches von dem Transponder (120) übertragen wird.

**6.** Die Lesevorrichtung (110) gemäß Anspruch 1, aufweisend
eine Bestimmungsseinheit (114), welche adaptiert ist zum Bestimmen ob das rückgestreute Signal zu einer Kommunikation zwischen der Lesevorrichtung (110) und dem Transponder (120) gehört basierend auf der evaluierten Distanz.

**7.** Die Lesevorrichtung (110) gemäß Anspruch 6, aufweisend
eine Dekodierungseinheit (116), welche adaptiert ist um Information zu dekodieren, welche in dem rückgestreuten Signal bei der Bestimmung kodiert ist, mittels der Bestimmungseinheit (114), dass das rückgestreute Signal zu der Kommunikation zwischen der Lesevorrichtung (110) und dem Transponder (120) gehört.

**8.** Die Lesevorrichtung (110) gemäß Anspruch 1,
welche als eine Höchstfrequenz langreichweitige Lesevorrichtung adaptiert ist.

**9.** Die Lesevorrichtung (110) gemäß Anspruch 1,
wobei die zwei Seitenbänder symmetrisch in Bezug auf eine Trägerfrequenz angeordnet sind, welche von der Lesevorrichtung (110) generiert wird.

**10.** Ein Kommunikationssystem (100) aufweisend:

einen Transponder (120) zum Übertragen von Information zu einer Lesevorrichtung (110);
eine Lesevorrichtung (110) gemäß Anspruch 1 zum Lesen von Information, welche vom Transponder (120) übertragen werden.

**11.** Das Kommunikationssystem (100) gemäß Anspruch 10,
wobei der Transponder (120) eines der Gruppe aufweist, welche aus einer Radiofrequenz-Erkennungsmarke und einer kontaktlosen Chipkarte besteht.

**12.** Ein Verfahren zum Lesen, mittels einer Lesevorrichtung (110), von Information übertragen von einem Transponder (120), das Verfahren aufweisend:

Abschätzen einer Distanz zwischen der Lesevorrichtung (110) und dem Transponder (120) basierend auf einer ausbreitungsbezogenen Differenz von einer Eigenschaft von zwei Seitenbändern von einem rückgestreuten Signal, welches von dem Transponder (120) übertragen wird,
wobei das Abschätzen von der Distanz zwischen der Lesevorrichtung (110) und dem Transponder (120) auf einer Trennung des Realteils und des Imaginärteils des rückgestreuten Signals basiert, welches von dem Transponder (120) übertragen wird.

**13.** Ein computerlesbares Medium, in welchem ein Computerprogramm gespeichert ist zum Lesen, mittels einer Lesevorrichtung (110), von Information, welche von einem Transponder (120) übertragen wird, welches Computerprogramm, wenn es von einem Prozessor ausgeführt wird, adaptiert ist, um ein Verfahren gemäß Anspruch 12 auszuführen oder zu steuern.

**14.** Ein Programmelement zum Lesen, mittels einer Lesevorrichtung (110), von Information, welche von einem Transponder (120) übertragen wurde, welches Programmelement, wenn es von einem Prozessor ausgeführt wird, adaptiert ist, um ein Verfahren gemäß Anspruch 12 auszuführen oder zu steuern.

**Revendications**

**1.** Dispositif de lecture (110) pour lire des informations transmises à partir d'un transpondeur (120), le dispositif de lecture (110) comprenant :

une unité d'évaluation de distance (112) agencée de manière à estimer une distance entre le dispositif de lecture (110) et le transpondeur (120) en fonction d'une différence liée à la propagation d'une propriété de deux bandes latérales d'un signal de rétrodiffusion transmis à partir du transpondeur (120),
dans lequel l'unité d'évaluation de distance (112) est agencée de manière à estimer la distance entre le dispositif de lecture (110) et le transpondeur (120) en fonction d'une séparation de la partie réelle et de la partie imaginaire du signal de rétrodiffusion transmis à partir du transpondeur (120).

2. Dispositif de lecture (110) selon la revendication 1, dans lequel l'unité d'évaluation de distance (112) est agencée de manière à estimer la distance entre le dispositif de lecture (110) et le transpondeur (120) en fonction d'une différence de temps d'arrivée des deux bandes latérales du signal de rétrodiffusion transmis à partir du transpondeur (120).

3. Dispositif de lecture (110) selon la revendication 1, dans lequel l'unité d'évaluation de distance (112) est agencée de manière à estimer la distance entre le dispositif de lecture (110) et le transpondeur (120) en fonction d'une différence de phase des deux bandes latérales du signal de rétrodiffusion transmis à partir du transpondeur (120).

4. Dispositif de lecture (110) selon la revendication 1, dans lequel l'unité d'évaluation de distance (112) est agencée de manière à estimer la distance entre le dispositif de lecture (110) et le transpondeur (120) en fonction d'une estimation de quadrature de sous-échantillon en temps discret.

5. Dispositif de lecture (110) selon la revendication 1, dans lequel l'unité d'évaluation de distance (112) comporte un récepteur cohérent pour estimer la distance entre le dispositif de lecture (110) et le transpondeur (120) en fonction d'une séparation de la partie réelle et de la partie imaginaire d'un signal transmis à partir du transpondeur (120).

6. Dispositif de lecture (110) selon la revendication 1, comprenant une unité de détermination (114) agencée pour déterminer si le signal de rétrodiffusion appartient à une communication entre le dispositif de lecture (110) et le transpondeur (120) en fonction de la distance évaluée.

7. Dispositif de lecture (110) selon la revendication 6, comprenant une unité de décodage (116) agencée pour décoder les informations codées dans le signal de rétrodiffusion si l'unité de détermination (114) détermine que le signal de rétrodiffusion appartient à une communication entre le dispositif de lecture (110) et le transpondeur (120).

8. Dispositif de lecture (110) selon la revendication 1, agencé en tant que dispositif de lecture UHF à grande distance.

9. Dispositif de lecture (110) selon la revendication 1, dans lequel les deux bandes latérales sont disposées de manière symétrique par rapport à une fréquence porteuse générée par le dispositif de lecture (110).

10. Système de communication (100) comprenant :

- un transpondeur (120) pour transmettre des informations à un dispositif de lecture (110) ;
- un dispositif de lecture (110) selon la revendication 1 pour lire des informations transmises à partir du transpondeur (120).

11. Système de communication (100) selon la revendication 10, dans lequel le transpondeur (120) comporte un élément parmi le groupe constitué d'une étiquette d'identification radiofréquence et d'une carte à puce sans contact.

12. Procédé de lecture, à l'aide d'un dispositif de lecture (110), des informations transmises à partir d'un transpondeur (120), le procédé comprenant :

- une estimation d'une distance entre le dispositif de lecture (110) et le transpondeur (120) en fonction d'une différence liée à la propagation d'une propriété des deux bandes latérales d'un signal de rétrodiffusion transmis à partir du transpondeur (120),

dans lequel l'estimation de la distance entre le dispositif de lecture (110) et le transpondeur (120) est fonction d'une séparation de la partie réelle et de la partie imaginaire du signal de rétrodiffusion transmis à partir du transpondeur (120).

13. Support lisible par ordinateur, dans lequel est stocké un programme informatique de lecture, par un dispositif de lecture (110), des informations transmises à partir d'un transpondeur (120), lequel programme informatique, lorsqu'il

**EP 2 300 849 B1**

est exécuté par un processeur, réalise ou contrôle un procédé selon la revendication 12.

14. Elément de programme de lecture, par un dispositif de lecture (110), des informations transmises à partir d'un transpondeur (120), lequel élément de programme, lorsqu'il est exécuté par un processeur, réalise ou contrôle un procédé selon la revendication 12.

**13**

Fig. 1

Fig. 2

Fig. 3

EP 2 300 849 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6943725 B
- US 20050012653 A
- US 2008150699 A1
- US 2005099333 A1